# EUROPEAN PATENT SPECIFICATION

(11) **EP 3 842 901 B1**
(45) Date of publication and mention of the grant of the patent: **28.08.2024**
(21) Application number: 20197912.7
(22) Date of filing: 23.09.2020
(51) Int. Cl.: G06F 3/01, H04L 65/1069, H04L 65/75, H04M 1/72409, H04M 1/60, G08B 6/00

(54) **SYSTEM FOR SYNCHRONIZING HAPTIC ACTUATORS WITH DISPLAYED CONTENT**
SYSTEM ZUR SYNCHRONISIERUNG VON HAPTISCHEN AKTUATOREN MIT ANGEZEIGTEN INHALTEN
SYSTÈME DE SYNCHRONISATION DES ACTIONNEURS HAPTIQUES AVEC LE CONTENU AFFICHÉ

(30) Priority: 27.12.2019 US 201916728680
(43) Date of publication of application: 30.06.2021
(73) Proprietor: INTEL Corporation, Santa Clara, CA 95054 (US)
(72) Inventor: KAMAT, Satyajit Siddharay, Santa Clara, CA California 95054 (US)
(74) Representative: Rummler, Felix

(56) References cited:
- EP-A1- 3 099 030
- WO-A2-2004/074997
- US-A1- 2003 227 374
- US-A1- 2019 043 321
- SWINDELLS COLIN ET AL: "Medium fidelity rapid prototyping of vibrotactile haptic, audio and video effects", 2014 IEEE HAPTICS SYMPOSIUM (HAPTICS), IEEE, 23 February 2014 (2014-02-23), pages 515 - 521, XP032582526, DOI: 10.1109/HAPTICS.2014.6775509

## Description

### TECHNICAL FIELD

Embodiments described herein generally relate to haptic systems and in particular, to a system that synchronizes haptic actuators with displayed content.

### BACKGROUND

Virtual reality (VR) is becoming increasingly popular. People may use VR for a variety of uses. A few examples include gaming, educational coursework, relaxation, or military training. VR includes visual and auditory stimulation. In some cases, the use of haptics (touch and feel) in VR is useful to more fully immerse the user into the virtual world.

US2003227374 A1 discloses synchronizing the operation of haptic devices with audio and video content. The tactile control data is transmitted in a frame-by-frame or packet data structure. Processed data is delivered to an electrotactile device via a data/address bus.

EP3099030 A1 discloses synchronizing haptic actuators with video data used to drive a head-mounted display and audio data used to drive speakers. It discloses receiving an indication to activate a haptic actuator from among a plurality of haptic actuators on a wearable device, based on a body model, constructing a data packet including the network address of the haptic actuator and details of an effect that the haptic actuator is to produce. It further discloses receiving a HAV stream (haptics-audio-visual), processing the received stream, decoding packets comprising haptic data and transmitting the haptic data to the wearable device.

WO2004074997 A2 discloses an illuminable assembly.

US2019043321 A1 discloses a wearable haptics body suite.

In "Medium fidelity rapid prototyping of vibrotactile haptic, audio and video effects" by C. Swindells, S. Pietarinen and A.Viitanen, 2014 IEEE Haptics Symposium, pages 515-521, a vibrotactile game controller is described, where synchronized audio and vibrotactile output is provided by dedicating both audio and vibrotactile channels to a single multichannel audio stream with six fully independent channels.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:
FIG. 1 is a block diagram illustrating a system that provides synchronization of haptic actuators with displayed content, according to an embodiment;
FIG. 2 illustrates two packet frame structures, according to an embodiment;
FIG. 3 is a block diagram illustrating a haptics multiplexer and formatter, according to an embodiment;
FIG. 4 is a block diagram illustrating a head-mounted display (HMD), according to an embodiment;
FIG. 5 is a block diagram of a haptics actuator, according to an embodiment;
FIG. 6 is a flowchart illustrating a method of synchronizing haptic actuators with displayed content, according to an embodiment; and
FIG. 7 is a block diagram illustrating an example machine upon which any one or more of the techniques (e.g., methodologies) discussed herein may perform, according to an example embodiment.

### DETAILED DESCRIPTION

Systems and methods described herein provide a system that synchronizes haptic actuators with displayed content. A haptic actuator includes a motor and a driver that may be integrated with wearable clothing and other devices to provide a sense of touch, vibration, or motion to a user (wearer). Haptics may be used to more fully immerse a person in a virtual reality (VR) environment. With a large number of haptic actuators distributed over some or all of a person's body, the person may experience a fully immersive virtual environment. Haptics may be used to provide touch sensations that are synchronized (e.g., coincide) with sight and sound in a virtual experience. The realism of the virtual reality may be improved by synchronizing the haptic actuators with the video content. Presently, haptic actuators are driven by custom interfaces that are unique to each VR system, where each VR system may be provided by different vendors. The pre-existing systems are limited by the interfaces available. They are not able to scale to a large enough number of haptic actuators to provide a fully immersive experience. What is needed is a system and method to synchronize large numbers of haptic actuators with displayed content.

This present disclosure describes a complete end-to-end system and method for synchronizing haptics feedback with video frame content using a control message, which may be used to drive any number of haptics actuators on a haptics suit using existing hardware connections like High-Definition Multimedia Interface (HDMI), DisplayPort (DP), or Universal Serial Bus (USB) Type C in Alternate DP mode, between compute and head-mounted display (HMD) with existing software drivers. It is understood that the control messaging may be extended to light controllers, such that lights that are on a wearable device may be synchronized with video frame content.

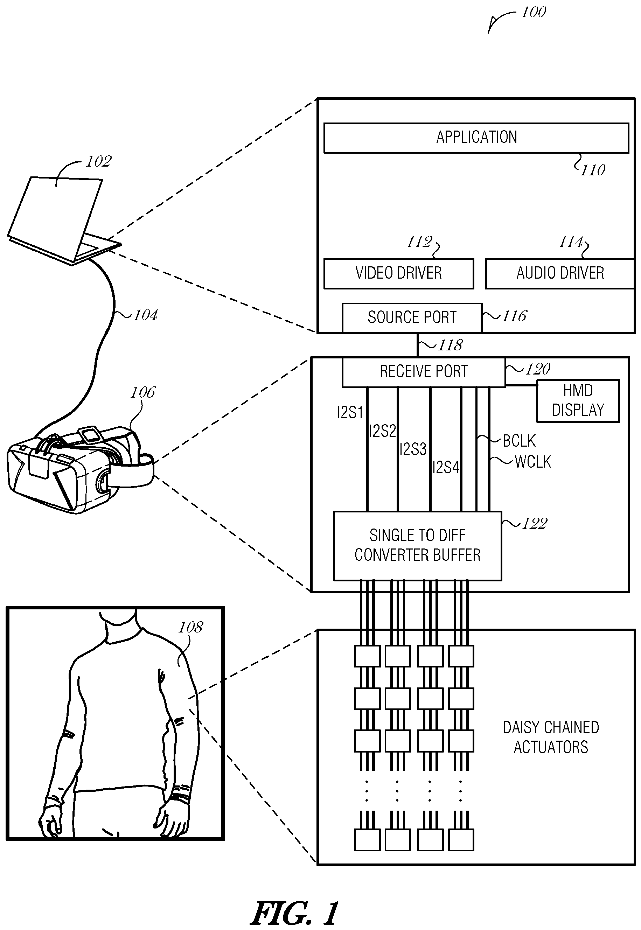

FIG. 1 is a block diagram illustrating a system 100 that provides synchronization of haptic actuators with displayed content, according to an embodiment. The system 100 includes a compute system 102 that is connected with a hardwired connection 104 to a head-mounted display (HMD) 106. The HMD 106 is connected to a wearable device 108 that includes haptic actuators. The wearable device 108 may be of any type including a shirt, body suit, hat, shoes, vest, watch, gloves, shorts, or the like. HMD 106 may be in the form of goggles, glasses, visor, helmet, or the like.

The compute system 102 may be of any type including but not limited to a laptop, hybrid computer, tablet, gaming system, phablet, smartphone, mobile device, television, desktop computer, or the like. The compute system 102 executes software to provide a VR experience to a user of the HMD 106 and wearable device 108. The VR experience may be of any type, such as a game, occupational training suite, work or productivity applications, real estate walkthroughs, home design, sports, movies and entertainment, or the like. When placed in the VR experience, the user may move around and interact with virtual object in a virtual environment. When interacting with these virtual objects, the haptic actuators built into wearable device 108, such as gloves, vests, bodysuits, boots, or other wearable elements are used to provide haptic feedback, such as force feedback and tactile experiences. This more fully immerses the user into the virtual world, especially when combined with visual and audio experiences.

The compute system 102 includes software and hardware components, such as application 110, video driver 112, and audio driver 114. The application 110 may provide signals, instructions, messages, or other control data to the video display driver 112 or audio driver 114 to output video or audio signals. The application 110 may also provide haptic signals based on collisions between the user and virtual objects as experienced in the virtual reality. The haptic signals are formatted using a data packet structure.

The application 110 may read a configuration of the wearable device 108. The configuration of the wearable device 108 may include predefined addresses of each haptic actuator present on the wearable device 108, along with an association of the haptic actuator address and a location of the haptic actuator on the wearable device 108. The configuration may be created, altered, or otherwise managed by a user, administrator, application designer, or other person.

During launch of a VR application, virtual physics objects in a virtual human body matching actual haptic actuator positions are created and assigned. During application execution, haptics data is continuously generated for various physics objects in response to user interactions. Treating the haptics actuators as in-application physics objects simplifies collision detection algorithms. Additionally, treating the actuators as in-application objects improves the ability of the system to generate haptics data in real-time and synchronize the haptics data with the rendered video frame.

To improve synchronization of haptics feedback with audio and visual information, a haptics packet formatter is used to collate data for all actuators into an audio frame buffer. In an example, packet structure for each haptics frame comprises a preamble (e.g., for clock recovery if clock-less operation is desired), actuator address (e.g., position on suit), haptics effect command code, effect intensity, and time duration.

According to further examples not being part of the claimed invention, the packet frame structure may be generalized so that it may carry alternative types of information or multiple types of information, such as a lighting commands or a combination of haptic information with other information or commands. For instance, the packet frame structure may be used to carry lighting effects information to illuminate one or more light emitting diodes (LEDs) on a wearable device. In the general case then, the audio and visual information is synchronized with activation of a control mechanism, where the control mechanism may be a haptics actuator (e.g., controller, driver, and motor), a light controller, or other type of output controller.

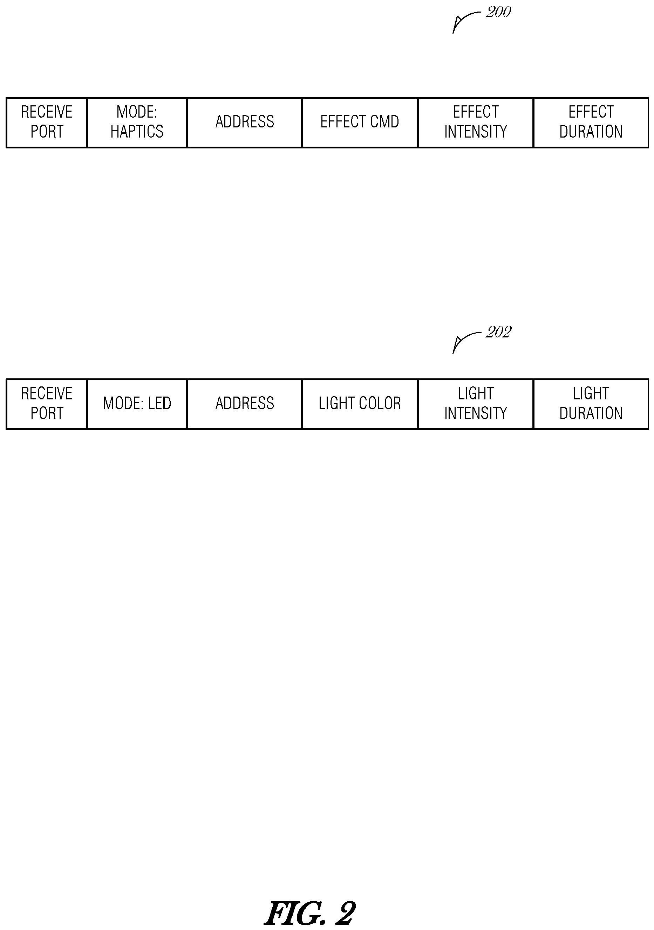

FIG. 2 illustrates two packet frame structures, according to an embodiment. It is understood that other packet structures may be used. As shown in FIG. 2, a haptics frame 200 includes a receive port preamble, a mode flag, an actuator address field, an effect command field, an effect intensity field, and an effect duration field.

The mode flag is used to indicate the type of packet frame. Modes may be "haptic" or "LED". The mode flag may be one bit for the binary selection, however it may be increased in field size to accommodate additional modes.

The actuator address field stores a unique address for each actuator. This allows the actuators to be individually addressed for a high-definition tactile experience. Actuators may be grouped and be provided a common group address. In such a configuration, all actuators with the same common group address may use the same effect command, intensity, and duration variables. This common group address may provide feedback to multiple actuators in a body region, such as providing haptic feedback in an upper arm of a user.

The effect command field stores a code to indicate which haptics effect to produce at the actuator. Depending on the number of different types of effects available, the field may be relatively small (e.g., two bits to support four effects) or relatively large (e.g., six bits to support sixty-four effects). Effects may include clicks, ramps, buzzes, pulses, or the like. Effects may include a combination of patterns of one of more clicks, ramps, buzzes, pulses, or the like.

The effect intensity field stores a code to indicate how intense to produce the haptic effect. This may include a range between minimum and maximum values, such as 1-16 or some other range. The minimum and maximum haptic effect values may correspond with minimum and maximum magnitude of haptic effects that may be produced by the particular haptic actuator. The effect intensity field may be used to indicate a constant or decaying effect. In various examples, the effect intensity field may be used to indicate a constant effect such as an ongoing vibration, or may be used to indicate a decaying effect, such as an explosion vibration that decays over the next few seconds.

The effect duration field stores a code to indicate how long the haptics effect is to be produced by the actuator. The duration may be stored as a number of milliseconds to produce the haptic effect. The effect duration field may be used to indicate an effect is to be sustained over a given period of time. The effect duration field may be used to indicate a priority, such as to indicate an effect is to be sustained briefly until a new effect occurs.

As also shown in FIG. 2, an LED frame 202 includes a preamble, a mode flag, an actuator address field, an LED color field, an LED color intensity field, and an LED color duration field. Similar to the haptics frame 200, the LED frame 202 may be used to drive LEDs on a wearable device.

Returning to FIG. 1, the video and audio data are combined in the source port 116 in the compute system 102. For example, each haptic control event is synchronized with and packetized within an audio frame. This provides the synchronization of each haptic event with the video data and audio data using underlying protocols. The receiving device (e.g., HMD 106) extracts the haptics data from the audio frame and uses it to drive haptic actuators.

The source port 116 may be a HDMI port, a DP port, a USB type C port, or the like. A cable 118 (e.g., hardwired connection 104) is used to connect the compute system 102 to the HMD 106. The HMD 106 includes a receive port 120, which may be of the same type as the source port 116 but is not required. For instance, the source port 116 may be an HDMI port and the receive port 120 may be a DP port with the cable 118 being an HDMI-to-DP cable. Other combinations of source and receive ports are included in the scope of this disclosure, such as USB-C to HDMI or DP to USB-C, for instance.

The HMD 106 receives video and audio data and uses it to present synchronized video and sound to the user via the HMD 106. Additionally, some or all of the audio frames are extracted and output over multiple channels. This may be performed using a single to differential converter and buffer 122. The channels may be Inter-IC Sound (I2S) bus lines. In an embodiment, all channels of a 7.1 audio signal are split up across four I2S bus lines with two audio channels per bus. Channels 1 and 2 may be output on I2S1, channels 3 and 4 may be output on I2S2, channels 5 and 6 may be output on I2S3, and channels 7 and 8 may be output on channels 7 and 8. Haptics actuators may be divided into four or more daisy chains, where each I2S data bus is routed to the actuators 124 on the respective bus. Actuators 124 may be generally referred to as "control mechanisms" when used to control lighting or other effects. This I2S data may be synchronized with respect to I2S bit clock and word clock. I2S bit clock and data are converted to a differential signal and fed to each daisy chain output. In an example, the differential signal may be used to extend the number or distance of haptic actuators included in wearable device 108.

In an example not being part of the claimed invention, a subset of the audio channels is used for haptics data, and the remaining channels may be used for audio output. For instance, in a 7.1 surround sound signal, the left and right channels may be used for audio (e.g., fed to a digital to audio converter (DAC) and output to headphones on the HMD 106), while the remaining six channels may be used for haptics data. With two channels per bus, there may be three I2S buses used for daisy chaining haptics actuators. Various forms of multiplexing may be used to send haptic information, such as time-division or frequency-division haptic control multiplexing. In an example, an effect, intensity, and duration may be used to actuate multiple haptic actuators in a predefined sequence. Other configurations may also be used to divide the audio and haptics data across audio channels.

Since actuator blocks 124 are daisy chained, it is possible to add actuators to a daisy chain and upgrade the wearable device 108. Alternatively, a vendor may produce different versions of a wearable device without affecting existing connections. Once haptics actuators or other control mechanisms are added, only configuration information needs to be updated to define the association between control mechanism address and control mechanism location on the wearable device. In an example, a wearable device may include additional haptic feedback actuators or control mechanisms between pre-existing haptic feedback actuators of a wearable device. In another example, a wearable device may modified to include additional haptic feedback actuators or control mechanisms extending beyond the actuators or control mechanisms, such as farther down an arm sleeve or pant leg.

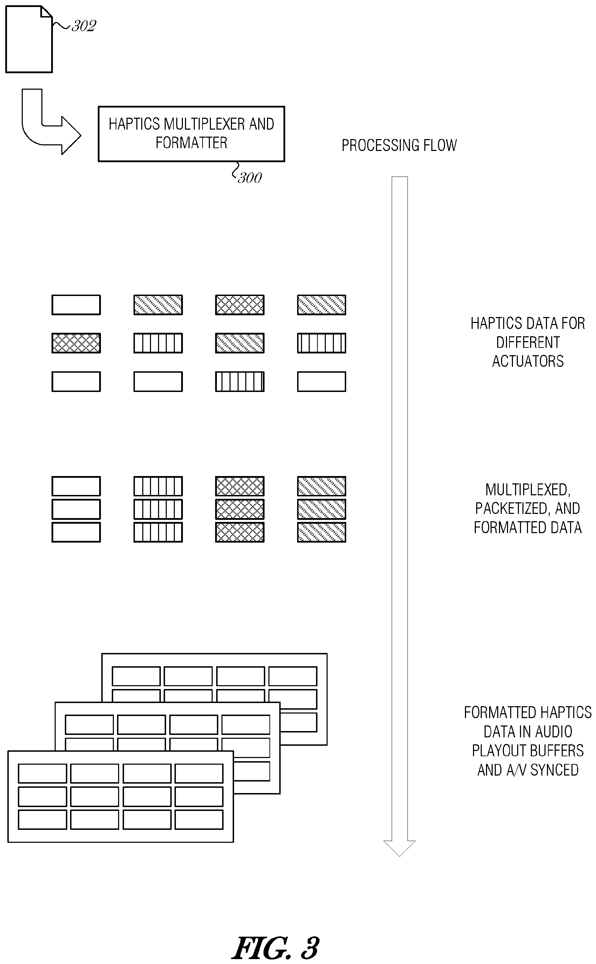

FIG. 3 is a block diagram illustrating a haptics multiplexer and formatter 300, according to an embodiment. The haptics multiplexer and formatter 300 may be implemented in software as a part of an application executing on a compute system (e.g., application 110 executing on compute system 102). Alternatively, the haptics multiplexer and formatter 300 may be middleware that is separate from the application and intercepts or receives video data, physics data, audio data, or other information from the application for which haptics are to be coordinated.

The haptics multiplexer and formatter 300 may access a configuration 302, which may be stored in a configuration file that is accessed on system startup, application startup, or the like. The configuration 302 includes a mapping between a haptic actuator location and a haptic actuator address. The location refers to the location on a wearable device and may be stored as a descriptive string, such as "left hand," "right hand," "upper chest," "left shin," or the like. The number and placement of haptics actuators may vary depending on the design of a wearable device, cost of a wearable device, use case of a wearable device, or other haptic configuration factors regarding the wearable device, user, regulator constraints, or the like.

Data received from the application by the haptics multiplexer and formatter 300 may include relative or absolute location data. For instance, a game engine in the application may track object collisions (e.g., bullets colliding with a user's avatar), and may track the collision location (e.g., gunshot to right forearm). The collision location information may be stored in a data packet and provided to a video frame renderer, for instance, to render a blood spray from the corresponding avatar limb. This collision information may be passed to the haptics multiplexer and formatter 300, which may process haptics data for different actuators, packetize and format the haptics data, and output the haptics frames in audio buffers that are synchronized with the video frame data.

While haptics actuators are discussed in FIG. 3, it is understood that general control mechanisms may be used, which may drive haptics, lights, or other effects using location and address mappings.

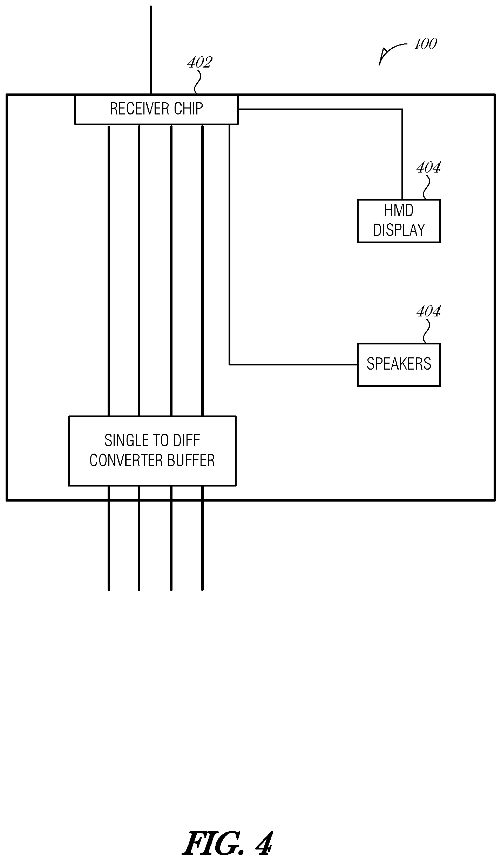

FIG. 4 is a block diagram illustrating a head-mounted display (HMD) 400, according to an embodiment. The HMD includes a receiver chip 402 that separate video data and audio data. The video data is used to drive one or more displays 404 on the HMD 400 (e.g., left and right display panel). The audio data is processed to determine which audio data frames are haptic data frames and which are audio data frames. Audio data frames are used to drive one or more resident speakers 406 on the HMD 400 or one or more external speakers.

The haptics data frames are passed through the appropriate bus as identified by the compute device. No inspection is required in HMD 400. In an example, the haptics multiplexer and formatter 300 ensures that the correct data is sent on I2S1/2/3/4 buses based on the location information of the actuators located on body. I2S lines are passed as is to daisy chains, where actuators inspect the frames to determine the destination address for each frame. The frame is transmitted on the appropriate bus (e.g., I2S line) that includes the addressable haptics actuator.

As described above, the haptics actuators may be divided among several buses, such as each bus running to a different zone on a haptic suit. I2S data may be formatted to synchronize with respect to an I2S bit clock and a word clock. I2S clock and data signals are converted to differential signals (e.g., to extend an effective physical signal transmission length) and fed to each daisy chain output. In an example, each I2S data channel can run up to ~9Mbps (max) in conventional HDMI. This channel throughput may increase with further HDMI development. As such, it easily carries multiplexed data for a large number of actuators, dependent on the frame size.

Again, here in FIG. 4, according to examples not being part of the claimed invention, the description is not limited to haptics data frames, but may be extended to any type of control mechanism (e.g., lighting).

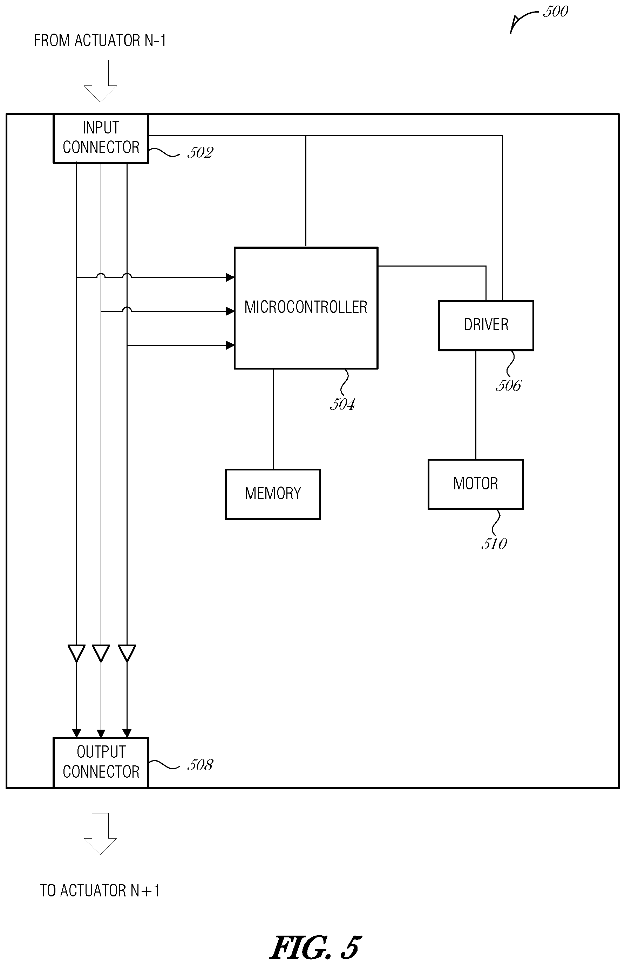

FIG. 5 is a block diagram of a haptics actuator 500, according to an embodiment. The haptics actuator 500 may be arranged in a daisy chain of other one or more haptics actuators (not shown). The haptics actuator 500 may receive haptics data frames at an input connection 502 from an upstream haptics actuator. Note that if the haptics actuator 500 is the first in line from the buffer, then it may receive the haptics data frames directly from the buffer in the HMD 400.

The haptics actuator 500 has an input connector 502, microcontroller 504, haptic driver 506, and output connector 508. Haptic driver 506 may be used to drive a motor 510, which may be a linear resonance actuator (LRA), eccentric rotating mass (ERM) motor, or the like. In an example, the haptics actuator 500 inputs three differential lines (e.g., I2S1, bit clock (BCLK), word clock (WCLK)). The input may include an I2S input and output, which may be included as an I2S bus or other bus protocol. In an example, the I2S input and output represent buffered input signals to drive haptics actuators downstream in the daisy chain.

Differential data is read off the lines by the microcontroller 504 and converted to single-ended (e.g., non-differential) output. The microcontroller 504 parses the data as it receives (e.g., sampled at BCLK and WCLK) and looks for a haptics actuator address in data stream. If it finds a match for its own address, then the haptics frame is extracted. The microcontroller 504 decodes the haptics frame and finds effect, intensity, and duration details and controls the haptics motor to produce the appropriate response.

The differential signals are amplified and output via output connector 508 to additional haptic actuators. Note that if this actuator is the last in the daisy chain, the signal lines may be terminated. As such, as each differential line is terminated at (e.g., connected to) each actuator, the signal at each actuator is replenished (e.g., amplified), buffered, and sent downstream. With this arrangement, a large number of haptics adapters may be connected in series while reducing or minimizing signal loading concerns.

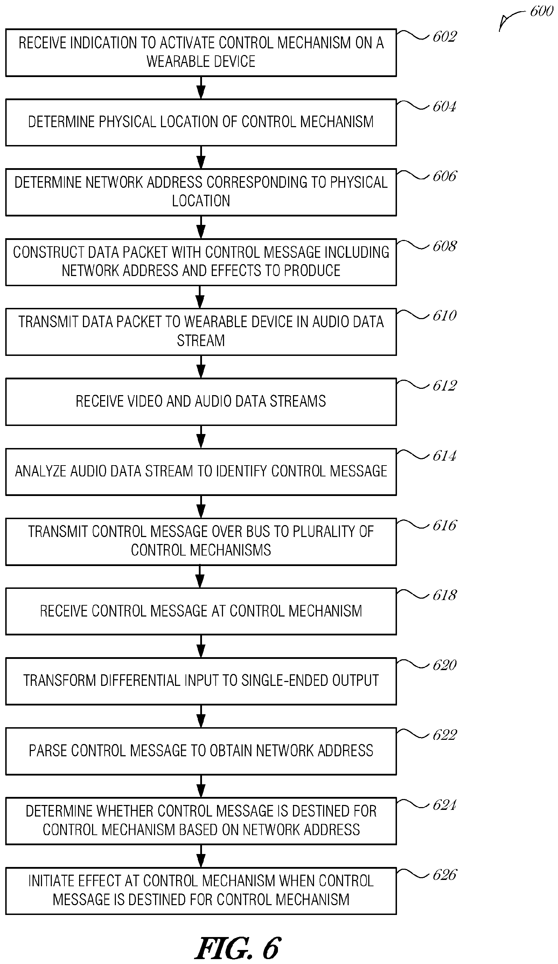

FIG. 6 is a flowchart illustrating a method 600 of synchronizing haptic actuators with displayed content, according to an embodiment. The method 600 begins operations at a computing system. At block 602, an indication to activate a control mechanism from among a plurality of control mechanisms on a wearable device connected to the system is received from an application executing on the computing system.

According to the invention, the control mechanism is a haptics actuator. In a further embodiment, the wearable device includes a haptics suit. In a further embodiment, the details of the effect include a type of effect, an intensity of effect, or a duration of effect.

According to an example not being part of the claimed invention, the control mechanism is a light controller. In a further example, the details of the effect include a color of light, an intensity of illumination, or a duration of illumination.

At block 604, a physical location of the control mechanism on the wearable device is determined. A configuration file or configuration database may be referenced to determine the physical location. This information may be preassembled by a user (e.g., an administrator, game designer, end user, etc.).

At 606, a network address corresponding to the physical location of the control mechanism is determined. The mapping between the network address and the physical location may be maintained in a configuration file, configuration database, or the like. The mapping may be stored with the references to the physical locations of the control mechanisms, or may be stored separately.

At 608, a data packet including a control message is constructed, the control message including the network address of the control mechanism and details of an effect that the control mechanism is to produce.

At 610, the data packet is transmitted to wearable device in an audio data stream. In an embodiment, transmitting the data packet includes transmitting the data packet using a high-definition multimedia interface (HDMI) protocol.

The method 600 continues operation at a head-mounted display (HMD) system. At 612, a video data stream and a time-correlated audio data stream is received. In an embodiment, the video data stream and the time-correlated audio data stream are contained in a high-definition multimedia interface (HMDI) message. In an embodiment, the method 600 includes transmitting the video data stream to a video processor in the HMD for output to a video display.

At 614, the audio data stream is analyzed to identify control messages in the audio data stream. This may be performed by packet inspection techniques and analyzing the preamble, mode, or other fields in the packetized audio data stream.

At 616, the control messages are transmitted over a bus to a plurality of control mechanisms. In an embodiment, transmitting the control messages over the bus includes separating the audio data stream into a plurality of channels, each channel associated with a serial bus that includes a plurality of control mechanisms. Then, a single to differential converter buffer is used to convert the audio data stream to a differential signal and a selected channel from the audio stream is identified. The differential signal is output over the serial bus corresponding to the selected channel. In a further embodiment, the serial bus is an Inter-IC Sound (I2S) bus.

The method 600 continues operation at a control mechanism. At 618, differential input and a clock input are received, where the differential input includes the control message.

At 620, the differential input is transformed to single-ended output, the single-ended output including the control message.

At 622, the control message is parsed to obtain the network address.

At 624, it is determined whether the control message is destined for the control mechanism based on the network address. A bitwise comparator may be used to determine whether the control message is addressed to the control mechanism.

At 626, an effect produced by the control mechanism is initiated based on the control message when the control message is destined for the control mechanism.

In an embodiment, the method 600 includes amplifying the differential input to produce an amplified differential signal and transmitting the amplified differential signal to a second control mechanism.

Embodiments may be implemented in one or a combination of hardware, firmware, and software. Embodiments may also be implemented as instructions stored on a machine-readable storage device, which may be read and executed by at least one processor to perform the operations described on a system described herein. A machine-readable storage device may include any non-transitory mechanism for storing information in a form readable by a machine (e.g., a computer). For example, a machine-readable storage device may include read-only memory (ROM), random-access memory (RAM), magnetic disk storage media, optical storage media, flash-memory devices, and other storage devices and media.

Examples, as described herein, may include, or may operate on, logic or a number of components, such as modules, intellectual property (IP) blocks or cores, or mechanisms. Such logic or components may be hardware, software, or firmware communicatively coupled to one or more processors in order to carry out the operations described herein. Logic or components may be hardware modules (e.g., IP block), and as such may be considered tangible entities capable of performing specified operations and may be configured or arranged in a certain manner. In an example, circuits may be arranged (e.g., internally or with respect to external entities such as other circuits) in a specified manner as an IP block, IP core, system-on-chip (SOC), or the like.

In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations. Accordingly, the term hardware module is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein.

Considering examples in which modules are temporarily configured, each of the modules need not be instantiated at any one moment in time. For example, where the modules comprise a general-purpose hardware processor configured using software; the general-purpose hardware processor may be configured as respective different modules at different times. Software may accordingly configure a hardware processor, for example, to constitute a particular module at one instance of time and to constitute a different module at a different instance of time. Modules may also be software or firmware modules, which operate to perform the methodologies described herein.

An IP block (also referred to as an IP core) is a reusable unit of logic, cell, or integrated circuit. An IP block may be used as a part of a field programmable gate array (FPGA), application-specific integrated circuit (ASIC), programmable logic device (PLD), system on a chip (SOC), or the like. It may be configured for a particular purpose, such as digital signal processing or image processing. Example IP cores include central processing unit (CPU) cores, integrated graphics, security, input/output (I/O) control, system agent, graphics processing unit (GPU), artificial intelligence, neural processors, image processing unit, communication interfaces, memory controller, peripheral device control, platform controller hub, or the like.

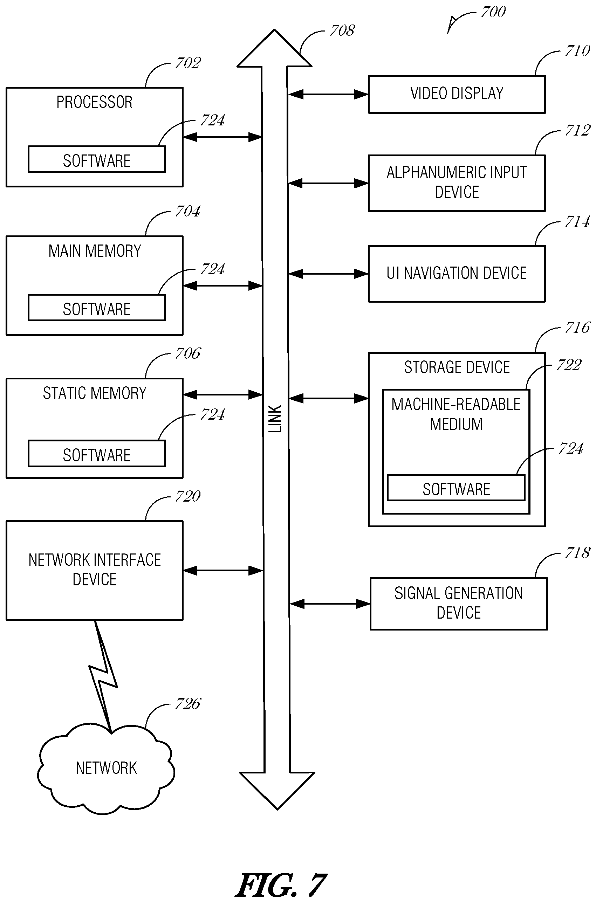

FIG. 7 is a block diagram illustrating a machine in the example form of a computer system 700, within which a set or sequence of instructions may be executed to cause the machine to perform any one of the methodologies discussed herein, according to an example embodiment. In alternative embodiments, the machine operates as a standalone device or may be connected (e.g., networked) to other machines. In a networked deployment, the machine may operate in the capacity of either a server or a client machine in server-client network environments, or it may act as a peer machine in peer-to-peer (or distributed) network environments. The machine may be an onboard vehicle system, set-top box, wearable device, personal computer (PC), a tablet PC, a hybrid tablet, a personal digital assistant (PDA), a mobile telephone, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. Similarly, the term "processor-based system" shall be taken to include any set of one or more machines that are controlled by or operated by a processor (e.g., a computer) to individually or jointly execute instructions to perform any one or more of the methodologies discussed herein.

Example computer system 700 includes at least one processor 702 (e.g., a central processing unit (CPU), a graphics processing unit (GPU) or both, processor cores, compute nodes, etc.), a main memory 704 and a static memory 706, which communicate with each other via a link 708 (e.g., bus). The computer system 700 may further include a video display unit 710, an alphanumeric input device 712 (e.g., a keyboard), and a user interface (UI) navigation device 714 (e.g., a mouse). In one embodiment, the video display unit 710, input device 712 and UI navigation device 714 are incorporated into a touch screen display. The computer system 700 may additionally include a storage device 716 (e.g., a drive unit), a signal generation device 718 (e.g., a speaker), a network interface device 720, and one or more sensors (not shown), such as a global positioning system (GPS) sensor, compass, accelerometer, or other sensor.

The storage device 716 includes a machine-readable medium 722 on which is stored one or more sets of data structures and instructions 724 (e.g., software) embodying or utilized by any one or more of the methodologies or functions described herein. The instructions 724 may also reside, completely or at least partially, within the main memory 704, static memory 706, and/or within the processor 702 during execution thereof by the computer system 700, with the main memory 704, static memory 706, and the processor 702 also constituting machine-readable media.

While the machine-readable medium 722 is illustrated in an example embodiment to be a single medium, the term "machine-readable medium" may include a single medium or multiple media (e.g., a centralized or distributed database, and/or associated caches and servers) that store the one or more instructions 724. The term "machine-readable medium" shall also be taken to include any tangible medium that is capable of storing, encoding or carrying instructions for execution by the machine and that cause the machine to perform any one or more of the methodologies of the present disclosure or that is capable of storing, encoding or carrying data structures utilized by or associated with such instructions. The term "machine-readable medium" shall accordingly be taken to include, but not be limited to, memory devices, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks.

The instructions 724 may further be transmitted or received over a communications network 726 using a transmission medium via the network interface device 720 utilizing any one of a number of well-known transfer protocols (e.g., HTTP). Examples of communication networks include a local area network (LAN), a wide area network (WAN), the Internet, mobile telephone networks, plain old telephone (POTS) networks, and wireless data networks (e.g., Wi-Fi, 3G, and 4G LTE/LTE-A or WiMAX networks). The term "transmission medium" shall be taken to include any intangible medium that is capable of storing, encoding, or carrying instructions for execution by the machine, and includes digital or analog communications signals or other intangible medium to facilitate communication of such software.

## Claims

1. A method for synchronizing haptic actuators (500) with video data used to drive one or more displays (404) on a head-mounted display (106; 400) and audio data used to drive one or more speakers (406), the method comprising:
receiving from an application (110) executing on a compute system (102), an indication to activate a haptic actuator (500) from among a plurality of haptic actuators (500) on a wearable device (108) connected to the compute system (102) via the head-mounted display (106; 400);
determining a physical location of the haptic actuator (500) on the wearable device (108);
determining a network address corresponding to the physical location of the haptic actuator (500);
constructing a data packet including a control message, the control message including the network address of the haptic actuator (500) and details of an effect that the haptic actuator (500) is to produce;
synchronizing details of the effect that the haptic actuator (500) is to produce with an audio data frame of an audio data stream and packetizing details of the effect that the haptic actuator (500) is to produce within the audio data frame as a haptic data frame, the audio data stream being time-correlated with a video data stream;
transmitting the video data stream and the audio data stream from the compute system (102),
receiving the video data stream and audio data stream at the head-mounted display (106; 400);
processing the received audio data stream to determine which frames are haptic data frames and which frames are audio data frames; and
transmitting the data packet including the control message to the wearable device (108).

2. The method of claim 1, wherein the wearable device (108) comprises a haptics suit.

3. The method of claim 1, wherein the details of the effect include a type of effect, an intensity of effect, or a duration of effect.

4. The method of claim 1, wherein transmitting the haptic data frames comprises using a high-definition multimedia interface protocol.

5. At least one machine-readable medium including instructions, which when executed by a system (100) comprising a compute system (102) and a head-mounted display (106; 400) connected with the compute system (102), further comprising one or more speakers (406) and a wearable device (108) connected to the head-mounted display, cause the system (100) to perform operations of any of the methods of claims 1-4.

6. An system (100) comprising means for performing any of the methods of claims 1-4, the system (100) comprising a compute system (102) and a head-mounted display (106, 400) connected with the compute system (102), further comprising one or more speakers (406) and a wearable device (108) connected to the head-mounted display.

## Patentansprüche

1. Verfahren zum Synchronisieren von haptischen Aktuatoren (500) mit Videodaten, die zum Ansteuern einer oder mehrerer Anzeigen (404) an einer kopfmontierten Anzeige (106; 400) verwendet werden, und Audiodaten, die zum Ansteuern eines oder mehrerer Lautsprecher (406) verwendet werden, das Verfahren umfassend:
Empfangen, von einer Anwendung (110), die auf einem Rechensystem (102) ausgeführt wird, einer Angabe zum Aktivieren eines haptischen Aktuators (500) aus einer Vielzahl von haptischen Aktuatoren (500) an einer Wearable-Vorrichtung (108), die über die kopfmontierte Anzeige (106; 400) mit dem Rechensystem (102) verbunden ist;
Bestimmen eines physischen Orts des haptischen Aktuators (500) an der Wearable-Vorrichtung (108);
Bestimmen einer Netzwerkadresse entsprechend dem physischen Ort des haptischen Aktuators (500);
Erstellen eines Datenpakets, einschließlich einer Steuernachricht, die Steuernachricht einschließlich der Netzwerkadresse des haptischen Aktuators (500) und Details einer Wirkung, die der haptische Aktuator (500) erzeugen soll;
Synchronisieren von Details der Wirkung, die der haptische Aktuator (500) erzeugen soll, mit einem Audiodatenframe eines Audiodatenstroms und Paketieren von Details der Wirkung, die der haptische Aktuator (500) erzeugen soll, innerhalb des Audiodatenframes als einen haptischen Datenframe, wobei der Audiodatenstrom mit einem Videodatenstrom zeitkorreliert ist;
Übertragen des Videodatenstroms und des Audiodatenstroms von dem Rechensystem (102),
Empfangen des Videodatenstroms und des Audiodatenstroms an der kopfmontierten Anzeige (106; 400);
Verarbeiten des empfangenen Audiodatenstroms zum Bestimmen, welche Frames haptische Datenframes sind und welche Frames Audiodatenframes sind; und
Übertragen des Datenpakets, einschließlich der Steuernachricht, an die Wearable-Vorrichtung (108).

2. Verfahren nach Anspruch 1, wobei die Wearable-Vorrichtung (108) einen haptischen Anzug umfasst.

3. Verfahren nach Anspruch 1, wobei die Details der Wirkung einen Wirkungstyp, eine Wirkungsintensität oder eine Wirkungsdauer einschließen.

4. Verfahren nach Anspruch 1, wobei das Übertragen der haptischen Datenframes ein Verwenden eines High Definition Multimedia Interface-Protokolls umfasst.

5. Mindestens ein maschinenlesbares Medium, einschließlich Anweisungen, die bei Ausführung durch ein System (100), umfassend ein Rechensystem (102) und eine kopfmontierte Anzeige (106; 400), die mit dem Rechensystem (102) verbunden ist, ferner umfassend einen oder mehrere Lautsprecher (406) und eine Wearable-Vorrichtung (108), die mit der kopfmontierten Anzeige verbunden ist, das System (100) zum Durchführen von Vorgängen eines der Verfahren nach einem der Ansprüche 1-4 veranlassen.

6. System (100), umfassend ein Mittel zum Durchführen eines der Verfahren nach einem der Ansprüche 1-4, das System (100) umfassend ein Rechensystem (102) und eine kopfmontierte Anzeige (106, 400), die mit dem Rechensystem (102) verbunden ist, ferner umfassend einen oder mehrere Lautsprecher (406) und eine Wearable-Vorrichtung (108), die mit der kopfmontierten Anzeige verbunden ist.

## Revendications

1. Procédé de synchronisation d'actionneurs haptiques (500) avec des données vidéo utilisées pour piloter un ou plusieurs affichages (404) sur un visiocasque (106 ; 400) et des données audio utilisées pour piloter un ou plusieurs haut-parleurs (406), le procédé comprenant :
la réception, depuis une application (110) s'exécutant sur un système informatique (102), d'une indication d'activer un actionneur haptique (500) parmi une pluralité d'actionneurs haptiques (500) sur un dispositif portable sur soi (108) connecté au système informatique (102) via le visiocasque (106 ; 400) ;
la détermination d'un emplacement physique de l'actionneur haptique (500) sur le dispositif portable sur soi (108) ;
la détermination d'une adresse réseau correspondant à l'emplacement physique de l'actionneur haptique (500) ;
la construction d'un paquet de données comportant un message de commande, le message de commande comportant l'adresse réseau de l'actionneur haptique (500) et des renseignements sur un effet que l'actionneur haptique (500) a pour but de produire ;
la synchronisation des renseignements sur l'effet que l'actionneur haptique (500) a pour but de produire avec une trame de données audio d'un flux de données audio et la paquetisation des renseignements sur l'effet que l'actionneur haptique (500) a pour but de produire au sein de la trame de données audio sous la forme d'une trame de données haptique, le flux de données audio étant temporellement corrélé avec un flux de données vidéo ;
la transmission du flux de données vidéo et du flux de données audio depuis le système informatique (102) ;
la réception du flux de données vidéo et du flux de données audio au niveau du visiocasque (106 ; 400) ;
le traitement du flux de données audio reçu afin de déterminer quelles trames sont des trames de données haptiques et quelles trames sont des trames de données audio ; et
la transmission du paquet de données comportant le message de commande au dispositif portable sur soi (108).

2. Procédé selon la revendication 1, le dispositif portable sur soi (108) comprenant une combinaison haptique.

3. Procédé selon la revendication 1, les renseignements sur l'effet comportant un type d'effet, une intensité d'effet, ou une durée d'effet.

4. Procédé selon la revendication 1, la transmission des trames de données haptiques comprenant l'utilisation d'un protocole d'interface multimédia haute définition.

5. Support(s) lisible(s) par machine comportant des instructions qui, lorsqu'elles sont exécutées par un système (100) comprenant un système informatique (102) et un visiocasque (106 ; 400) connecté au système informatique (102), comprenant en outre un ou plusieurs haut-parleurs (406) et un dispositif portable sur soi (108) connecté au visiocasque, amènent le système (100) à réaliser des opérations de l'un quelconque des procédés selon les revendications 1 à 4.

6. Système (100) comprenant des moyens de réalisation de l'un quelconque des procédés selon les revendications 1 à 4, le système (100) comprenant un système informatique (102) et un visiocasque (106, 400) connecté au système informatique (102), comprenant en outre un ou plusieurs haut-parleurs (406) et un dispositif portable sur soi (108) connecté au visiocasque.
